# EUROPEAN PATENT SPECIFICATION

(11) **EP 2 599 845 B1**
(45) Date of publication and mention of the grant of the patent: **20.08.2014**
(21) Application number: 11191706.8
(22) Date of filing: 02.12.2011
(51) Int. Cl.: C09J 7/02, C09J 7/00

(54) **Double sides adhesive foil**
Doppelseitige Haftfolie
Feuille adhésive double face

(43) Date of publication of application: 05.06.2013
(73) Proprietor: Oticon A/S, 2765 Smoerum (DK)
(72) Inventor: Karlsen, Morten Friis, DK-2765 Smørum (DK)

(56) References cited:
- EP-A1- 0 852 149
- DE-U1-202004 010 911
- US-A1- 2007 212 509

## Description

### AREA OF THE INVENTION

The invention relates to a double sided adhesive foils, especially as an accessory to a hearing aid which is to aid in maintaining the hearing aid in place behind the ear of a user, also during vigorous activity, such as participation in sports.

### BACKGROUND OF THE INVENTION

A problem with BTE hearing aids is that they in some situations fall off the user's ear. This problem is especially related to children or babies who have small ears and external ear tissue which is too soft to keep a BTE hearing aid in place. But the problem is also seen among adults doing sport, horseback riding, gardening etc.

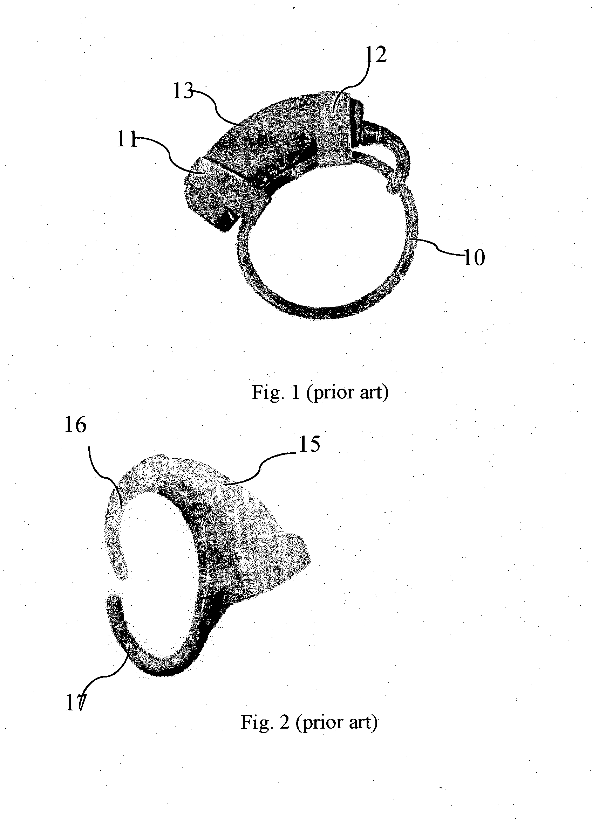

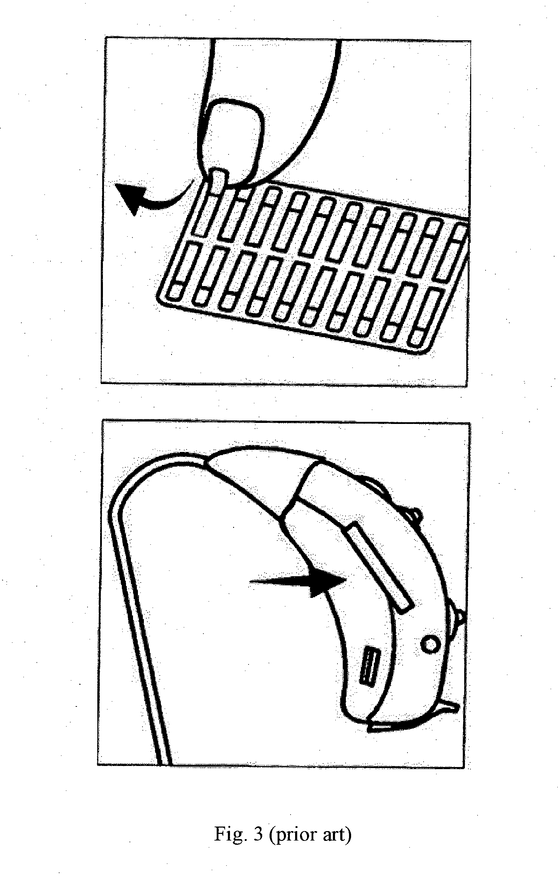

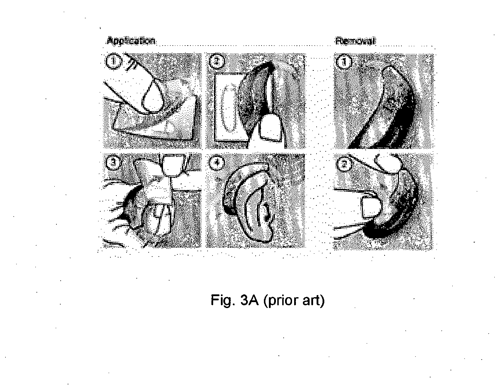

Different attempts have been made to solve this problem and examples of prior art are :
- The "Huggies" product seen in fig. 1, which is a PVC ring around the ear attached to the hearing aid with rubber rings,
- formable hooks with mechanical interlocking with the hearing aid is shown in fig. 2
- Double Adhesive Tapes such as shown in fig. 3, marketed and sold by Widex,
- Doble sided adhesive tape sold by the company Phonak shown in fig. 3A.

A problem with retaining the hearing aid on the ear is the attachment between the hearing aid retainer accessory and the BTE hearing aid. Hearing aids are usually not designed to have hearing aid retainer accessory attached. This makes it complicated to design a hearing aid retainer accessory that does not interfere with one or more of the usual external parts: programming/volume button(s), wheel(s), microphones, LED, battery drawer and FM connector. A further problem is to avoid weakening the HA and to avoid a hearing aid which becomes thicker or change geometry or looks when the retainer is used. As it is not possible to retain a hearing aid on small children's ears with a formable hook or a Huggie because of the very soft ears of small children, the best solution is considered to be a double sided tape.

Further a double adhesive tape is the smallest and most discreet solution. Some problems with the double adhesive tapes on the market are that they are not intuitive and easy to attach or place on the hearing aid. Some can be hard to peel off the hearing aid after use and others sometime are left on the skin and not on the hearing aid when the hearing aid has to be pulled off the ear.

One prior product is the double sided adhesive sold under the trade name "Stick `n Stay". Her the placement of the tape on the hearing aid is a blind operation because the tape patches are placed on a big non-transparent liner and the user has to lower the hearing aid down onto the tape from above and as the hearing aid is larger than the tape patches it is not possible to see where on the HI, the tape will attach, see fig. 3A.

The prior art tapes has a nail grip to ease peeling the tape off the hearing aid after use. The known nail grip is a small flap of the double sided tape at an edge portion thereof whereon the adhesive is blocked to the side facing the hearing aid by way of which the tape can then be lifted away from the hearing aid in order to be gripped by the user for pulling the tape off the hearing aid after use. The side of the flap facing the skin sticks to the skin when the hearing aid is taken off the ear, which results in a bigger adhesion area to the skin than to the hearing aid in the peeling line. So even though the adhesion strength is bigger towards the hearing aid than towards the skin, the bigger adhesion area towards the skin will result in that the tape is left on the skin instead of on the hearing aid, which is unwanted.

### SUMMARY OF THE INVENTION

It is intended that the structural features of the system described in the description and in the claims can be combined with the method, when appropriately substituted by a corresponding process. Embodiments of the method have the same advantages as the corresponding systems.

Further objects of the invention are achieved by the embodiments defined in the dependent claims and in the detailed description of the invention.

As used herein, the singular forms "a," "an," and "the" are intended to include the plural forms as well (i.e. to have the meaning "at least one"), unless expressly stated otherwise. It will be further understood that the terms "includes," "comprises," "including," and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements maybe present, unless expressly stated otherwise. Furthermore, "connected" or "coupled" as used herein may include wirelessly connected or coupled. As used herein, the term "and/or" includes any and all combinations of one or more of the associated listed items. The steps of any method disclosed herein do not have to be performed in the exact order disclosed, unless expressly stated otherwise.

According to the invention a double sided adhesive foil is provided which comprises a flexible foil with an outline and which is sticky on two opposed sides, and has first and second removable liners adhered to and covering the sticky sides having each their pealing release force to the adhesive foil, where the second liner comprises a circumference with a tap portion which extends beyond the boundaries of the double sided adhesive foil, and is adapted for gripping between a users fingers. The release peeling force between the adhesive foil and the second liner is higher than the release pealing force between the adhesive foil and the first liner. With this arrangement the user may grip the tap portion between two fingers, and draw the second liner away from the first liner, with the adhesive foil attached to the second liner. The tap portion allows the user an easy way to lift the adhesive foil off the first liner without coming into contact with the adhesive foil, and manipulate the foil and transport it to the place of use, namely at a hearing aid casing. This problem is not well addressed in the prior art such as the products shown in fig. 3 and fig. 3A.

The invention further provides an adhesive foil, wherein the second liner is transparent and the tap portion extends beyond the outline of the adhesive foil at least at two or more edge portions of the adhesive foil. In this way the second liner may be gripped as disclosed above, and when placed between the user and a hearing aid, the user may see the outline of a possible target area on the hearing aid even if the second liner is between the viewer and hearing aid.

Preferably only one tap portion is provided at the second liner and a grip portion is provided at the adhesive foil opposite the tap portion, whereby the grip portion comprises non-adhesive parts on both sides of the adhesive foil abutting the edge of the foil. This ensures, that the foil has a more pronounced tendency to stay with the hearing aid than with the skin, when the ha with the foil is lifted off the ear.

According to a further embodiment, the foil has an elongate shape with a length axis defining a symmetrical mirror line for the outline of the adhesive foil. This is advantageous in that the foil may easily be applied to either side of a hearing aid casing.

According to an embodiment, the grip portion comprise a release layer at one or both sides thereof adapted to prohibit fastening of the grip portion onto any part of the adhesive surfaces of the double sided adhesive foil. This aids in securing that the grip portion will not flip over and get stuck onto the adhesive foil and become impossible for the user to get hold of.

### BRIEF DESCRIPTION OF THE DRAWINGS

Fig. 1 is an example of a prior art solution,
Fig. 2 is a further example of a solution known from the prior art,
Fig. 3 shows a further example of a prior art solution comprising a double sided adhesive,
Fig. 3A is a further example of a prior art double sided hadhesive,
Figs. 4A and 4B shows the hearing aid and skin interface in two positions, a first position at the onset of removing the hearing aid from the skin and a second position with the hearing aid partially removed, when the invention is used with a nailgrip for lifting the double sided adhesive tape off the hearing aid,
Fig. 4C and 4D discloses the hearing aid and skin interface as disclosed in fig. 4A and 4B, however here the nailgrip is made without adhesive on both sides,
Fig. 5 is an example of a pair of retaining tapes provided on a liner and ready for use,
where the one of the pair is shown in exploded view,
Fig. 6 is the element shown in fig. 5 but displayed in a plan view,
Fig. 7 is a plan view of an outline of an adhesive retainer with the second liner drawn in full line,
Fig. 8 is an illustration of the nail grip being unintentionally flipped over to cover the adhesive surface,
Fig. 9 is an illustration of the nail grip being flipped back from the adhesive surface.

The figures are schematic and simplified for clarity, and they just show details which are essential to the understanding of the invention, while other details are left out. Throughout, the same reference numerals are used for identical or corresponding parts.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### DESCRIPTION OF A PREFERRED EMBODIMENT

The prior art retention means shown in Fig. 1, and here a circular band 10 is associated the hearing aid 13 and intended to circumscribe the entire outer ear when the hearing aid is placed behind the users ear. Two small flexible bands 11, 12 are provided as ties between the circular band and the hearing aid by encircling the hearing aid casing and the circular band 10.

The prior art retainer shown in fig. 2 comprise a plastic semi enclosure 15 wherein the hearing aid (not seen in fig. 2) may be seated, and where an upper hook 16 and lower hook 17 are provided in order to provide a grip around the outer ear of the user.

Fig 3. shows yet another example of prior art, whereby small pieces of double sided adhesive are attached to carrier, and may be lifted off the carrier and attached to a surface part of a hearing aid casing. A lift off tap is provided at one end of the adhesive carriers.

Fig. 3A shows a further example of a prior art double sided tape, where the double sided tape is provided between two liners, such that the first liner is to be pulled away leaving a patch of double sided adhesive tape on the second liner. Following this the user may lower the hearing aid onto the adhesive tape seated on the second liner and the patch may then be adhered to the hearing aid shell and the second liner pulled away. When the user lowers the hearing aid onto to the patch on the second liner, the user cannot see the outline of the patch, as the hearing aid blocks the view, and as a result, the patch cannot be very precisely positioned on the hearing aid shell.

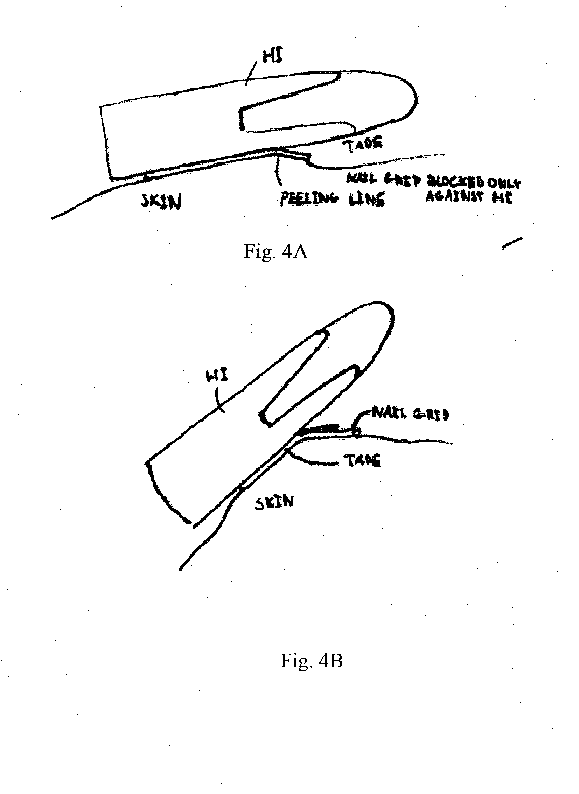

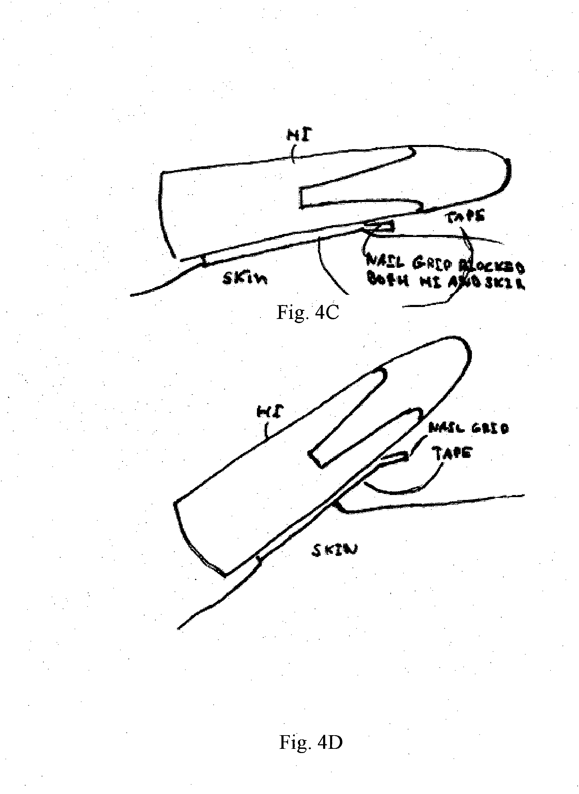

Figs. 4A and 4B show a hearing aid 13 which is attached to the skin 20 of a user by means of a double sided adhesive tape 21 according to the prior art. In Fig. 3A the hearing aid is attached to the skin, and in fig. 3B the hearing aid is being peeled off the skin however, leaving the tape 21 attached to the skin which is un-desirable. The reason for this is that a nail grip is placed in the one end of the adhesive tape such that an edge part thereof is not attached to the hearing aid surface. This nail grip portion is an advantage when the tape is to be drawn off the hearing aid surface after use as it allows the user to pinch the tape between a couple of nails for pulling the tape away from the hearing aid. However, as seen in figs. 3A and B sometimes the tape stays with the skin and not with the hearing aid surface, due firstly to the pealing initiator between hearing aid and the tape provided at the intersection between nail grip and remaining part of the adhesive, and secondly to the larger size of skin/adhesive intersection surface compared to the size of the hearing aid/adhesive intersection surface, as this difference will give a overall larger adherence between skin and tape than between tape and hearing aid surface.

In Fig. 4C and 4C a similar situation is depicted however here the nail grip is made with no adhesive at both its sides, such that it will adhere to neither skin nor hearing aid surface. In this way the overall adherence force between skin and tape will be smaller than between hearing aid and tape as the skin/tape interface area is not larger than the hearing aid/tape interface area, and there is no distinct peel initiator between the hearing aid and the tape.

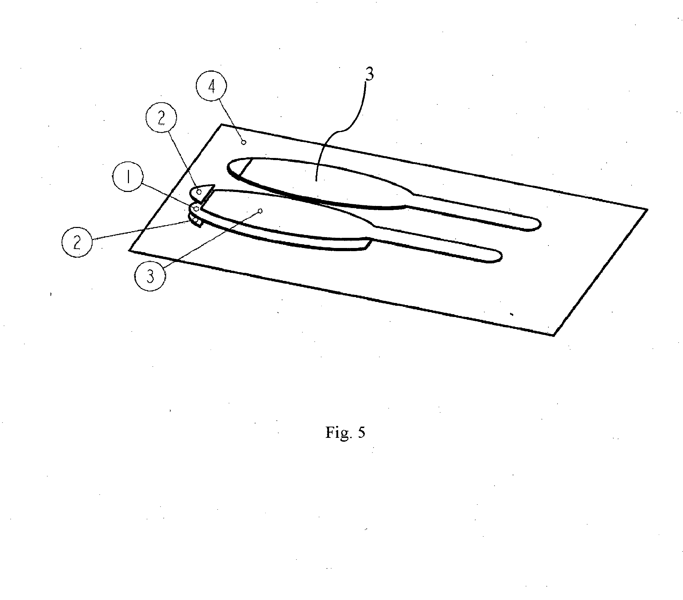

Fig. 5 shows a 3D representation of a pair of double sided adhesive tapes mounted on a liner and ready for use, where one of the tapes 3 is shown in exploded view to display the various layers of the structure.

The double adhesive foil 1 is placed between a first liner 4 and a second liner 3, and the pealing release force between the foil 1 and the first liner 4 is lower than the pealing release force between the foil 1 and the second liners 3. In this way it is ensured that when two liners 3,4 are manually separated, the foil 1 will stay attached to the second liner 3.

In the embodiment shown in fig. 3 two foil pieces 1, are provided with each their second liner 3 and mounted on a common first liner 4. This first liner 4 is made with a generally square shape and extends beyond the foil and second liner 3 to all sides thereof. This is in good keeping with the rather common user situation, where a user has a hearing aid on each of his ears, and a first liner 4 with two foils 1 will then allow such a user to have both his hearing aids attached to the head.

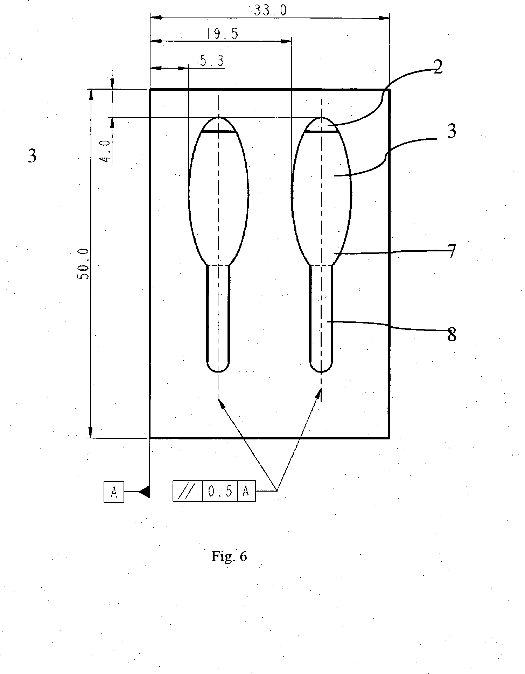

As seen in fig. 6 the double sided adhesive foil 1 according to the invention has a generally oval shape with a main axis being two to four times the size of the minor axis, and the second liner 3 is produced to coincide with this shape around most of the circumference of the foil 1. At both ends of the main axis the second liner 3 deviates from the circumference of the foil, and in the one end 7 a lengthy tap portion 8 is provide to extend generally away from the foil in a direction along the main axis, and in the opposite end, a nail grip 2 is provided. The nail grip 2 is a small section of the foil 1, which has no adhesive property and which is not covered by the second liner. This may be accomplished with liners 2 (seen in fig. 5) which do not have a release layer thereon, such that they may not be peeled off the foil. Alternatively the nail grip areas are simply not provided with the adhesive, which is responsible for the sticky property of the foil 1.

In use the user lifts the tap portion 8 and peels the double adhesive off the first liner 2 and transfers it to the hearing aid, possibly while holding on to the nail grip portion with the other hand. Resulting from the two nail grip liners 2 as shown in fig. 5, the nail grip area of the foil will not stick to other items, be it skin, hearing aid surface or nails of a user, and this area may therefore be gripped between fingertips or nails of a user and touched down onto the hearing aid, while the other end with the tap portion 8 is held between the fingers of the other hand and lowered onto the hearing aid shell in the correct position relative to a target area appointed in advance by the user to receive the double adhesive foil. The tap 8 is then pulled away from the hearing aid, and the second liner is peeled off the adhesive foil, leaving the double sided adhesive foil sticking to the hearing aid. After this operation, the hearing aid may be attached to a skin portion of the user, and due to the stickiness of the double adhesive foil 1, the hearing aid will then adhere to the user even during performance of vigorous exercise.

The nail grip portion allows the user to get a grip at a small part of the foil without scratching the hearing aid surface with nails or implements, and by simply pulling at the nail grip portion the foil may be peeled off the hearing aid surface part to which it has been adhered. Ideally this can be done without the foil leaving any trace of glue or the like on the hearing aid surface.

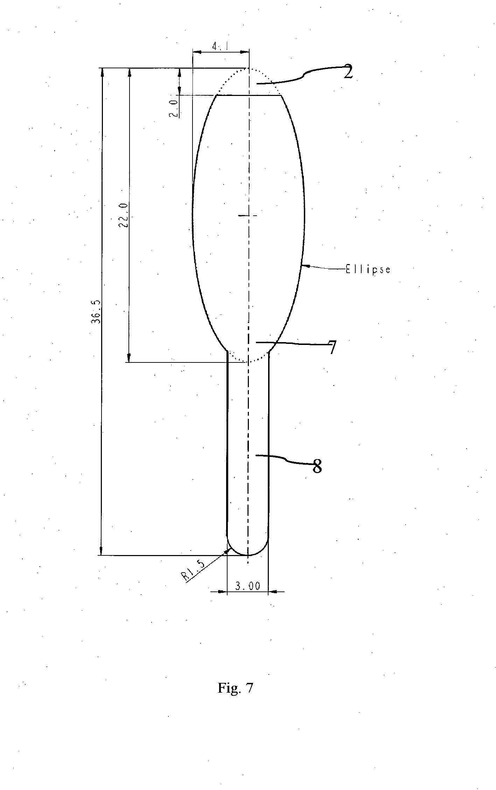

From Fig. 7 it can be gathered, that the main body of the ellipsoid of the double adhesive foil has a main axis of 22mm and a minor axis of 8.2mm, and the tap portion extending away from the ellipse has a length of around 14mm. The nail grip has a length along the main axis of around 2mm. These measures may vary within 2-10% in without departing from the main idea of the invention.

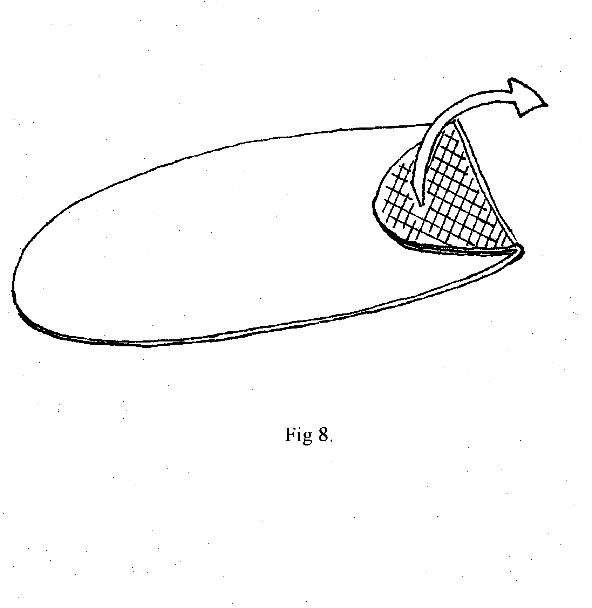

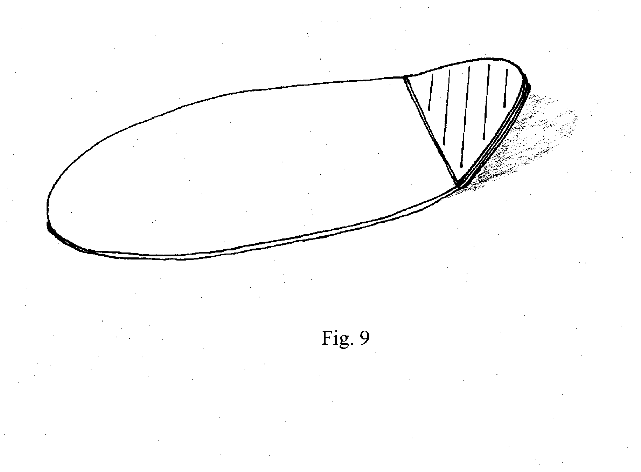

Fig. 8 and 9 further describes the advantages of the nail grip being without adhesive power on both sides. As seen in fig. 8 it may occur that the nail grip is flipped backwards and onto the surface of the adhesive foil and if the nail grip is itself adhesive it is sure to hook onto the remaining foil. This would render the nail grip un-functional. To avoid this, the nail grip has both its sides rendered non-adhesive and preferably the side facing the skin of a user when the hearing aid is in place, has been prepared with a waxy substance or the like, such that it will not stick to the remaining adhesive surface of the foil. In this way the nail grip may be flipped as indicated with arrow 20 back in a more up-right position as indicated in fig. 9. In the position shown in fig. 9 the nail grip is easily gripped.

The outline of the double sided adhesive foil is to match a target area on a hearing aid, and it is attempted to make the foil with a shape, such that a corresponding target area may be appointed on most hearing aids in use. The target area must be even and without external elements such as battery drawers, buttons, volume wheels, microphone inlets, lcd display units or similar elements not on-common in behind the ear hearing aids. In order to fit onto many different hearing aid models the elongate rounded shape has been chosen for the foil.

The second liner may be transparent, and extend beyond the outline of the adhesive foil, and then the user may grip the second liner at a tap portion, and draw it away from the first liner with the foil attached thereto, and then place the liner above the hearing aid target area and lower the liner onto the hearing aid, joining the sticky surface of the foil with the hearing aid surface, while possibly observing the outline of the hearing aid and the target area through the second liner.

In case the second liner is not transparent it is preferred that the tap portion is provided only at a limited edge portion thereof, such as at an end portion, thereby allowing the user to have a good view of the hearing aid target surface besides the second liner while lowering this onto the hearing aid target area with the adhesive foil facing the hearing aid.

## Claims

1. Double sided adhesive foil comprising:
- a flexible foil having an outline and being sticky on two opposed sides,
- first and second removable liners adhered to and covering the sticky sides having each their pealing release force to the adhesive foil,
- the second liner comprising a circumference with a tap portion extending beyond the boundaries of the double sided adhesive foil, and being adapted for gripping between a users fingers, wherein
- the release peeling force between the adhesive foil and the second liner is higher than the release pealing force between the adhesive foil and the first liner.

2. Double sided adhesive foil as claimed in claim 1, wherein the second liner is transparent and the tap portion extends beyond the outline of the adhesive foil at least at two edge portions of the adhesive foil.

3. Double sided adhesive foil as claimed in claim 1, wherein one tap portion is provided at the second liner and a grip portion is provided at the adhesive foil opposite the tap portion, whereby the grip portion comprises non-adhesive parts on both sides of the adhesive foil abutting the edge of the foil.

4. Double sided adhesive foil as claimed in claim 3, wherein the foil has an elongate shape with a length axis defining a symmetrical mirror line for the outline of the adhesive foil.

5. Double sided adhesive foil as claimed in claim 3 wherein the grip portion comprise a release layer at one or both sides thereof adapted to prohibit fastening of the grip portion onto any part of the adhesive surfaces of the double sided adhesive foil.

## Patentansprüche

1. Doppelseitige adhäsive Folie umfassend:
- eine flexible auf zwei gegenüberliegenden Seiten klebende Folie mit einem Umriss,
- erste und zweite an dieser haftende und die klebenden Seiten abdeckende entfernbare Liner, von denen jeder eine eigene Abzugskraft gegenüber der adhäsiven Folie hat,
- wobei der zweite Liner eine Ausdehnung mit einem Greifabschnitt hat, der sich über die Grenzen der doppelseitigen adhäsiven Folie erstreckt und ausgebildet ist von den Fingern eines Nutzers gegriffen zu werden, wobei
- die Abzugskraft zwischen der adhäsiven Folie und dem zweiten Liner höher als die Abzugskraft zwischen der adhäsiven Folie und dem ersten Liner ist.

2. Doppelseitige adhäsive Folie wie in Anspruch 1 beansprucht, wobei der zweite Liner transparent ist und der Greifabschnitt sich mindestens an zwei Kantenteilen der adhäsiven Folie über den Umriss der adhäsiven Folie hinaus erstreckt.

3. Doppelseitige adhäsive Folie wie in Anspruch 1 beansprucht, wobei ein Greifabschnitt am zweiten Liner und ein dem Greifabschnitt gegenüberliegender Halteabschnitt an der adhäsiven Folie vorgesehen ist und wobei der Halteabschnitt nichtadhäsive an die Kanten der Folie angrenzende Teile auf beiden Seiten der adhäsiven Folie aufweist.

4. Doppelseitige adhäsive Folie wie in Anspruch 3 beansprucht, wobei die Folie eine gestreckte Form mit einer Längenachse hat, die eine symmetrische Spiegellinie für den Umriss der adhäsiven Folie definiert.

5. Doppelseitige adhäsive Folie wie in Anspruch 3 beansprucht, wobei der Halteabschnitt eine Trennschicht auf einer oder beiden Seiten aufweist, die ausgebildet ist ein Befestigen des Halteabschnitts auf irgendeinem Teil der adhäsiven Oberflächen der doppelseitigen adhäsiven Folie zu verhindern.

## Revendications

1. Feuille adhésive double-face comprenant:
- une feuille flexible ayant un contour et étant collante sur deux faces opposées,
- des premier et deuxième revêtements amovibles collés aux, et couvrant les, faces collantes ayant chacune leur force de libération au pelage à la feuille adhésive,
- le deuxième revêtement comprenant une circonférence avec une portion de languette s'étendant au-delà des limites de la feuille adhésive double-face, et étant adaptée pour la préhension entre des doigts d'un utilisateur, où
- la force de libération au pelage entre la feuille adhésive et le deuxième revêtement est supérieure à la force de libération au pelage entre la feuille adhésive et le premier revêtement.

2. Feuille adhésive double-face telle que revendiquée dans la revendication 1, où le deuxième revêtement est transparent et la portion de languette s'étend au-delà du contour de la feuille adhésive au moins au niveau de deux portions de bordure de la feuille adhésive.

3. Feuille adhésive double-face telle que revendiquée dans la revendication 1, où une portion de languette est prévue au niveau du deuxième revêtement et une portion de préhension est prévue au niveau de la feuille adhésive de façon opposée à la portion de languette, où la portion de préhension comprend des parties non-adhésives sur chacune des faces de la feuille adhésive contigües à la bordure de la feuille.

4. Feuille adhésive double-face telle que revendiquée dans la revendication 3, où la feuille a une forme allongée avec un axe longitudinal définissant une ligne de symétrie en miroir pour le contour de la feuille adhésive.

5. Feuille adhésive double-face telle que revendiquée dans la revendication 3 où la portion de préhension comprend une couche de libération au niveau de l'une ou de chacune des faces de celle-ci adaptée pour interdire la fixation de la portion de préhension sur l'une quelconque des parties des surfaces adhésives de la feuille adhésive double-face.
